# EUROPÄISCHE PATENTANMELDUNG

(11) **EP 3 369 756 A1**
(43) Veröffentlichungstag der Anmeldung: **05.09.2018**
(21) Anmeldenummer: 18000041.6
(22) Anmeldetag: 18.01.2018
(51) Int. Cl.: C08G 18/48, C08G 18/79, C08G 18/10, C08G 18/38, E04B 1/00

(54) **VERFAHREN ZUR HERSTELLUNG EINER VERFÜLLTEN BODENFUGE**

(30) Priorität: 02.03.2017 DE 102017104352
(71) Anmelder: REVOPUR GmbH, 97318 Kitzingen (DE)
(72) Erfinder: LUCKERT, Sven, 97320 Sulzfeld (DE)
(74) Vertreter: Gleim, Christian Ragnar

(57) **Zusammenfassung**

Verfahren zur Herstellung einer verfüllten Bodenfuge (1) in einem Bauwerk, insbesondere einer Dehnfuge in Industrieböden, umfassend die Schritte:
d) Herstellen einer Ausnehmung (21) im Bodenbelag (2) in der Länge der Bodenfuge (1);
e) Verfüllen der Ausnehmung (21) mit einem Reaktivsystem (3) enthaltend:
iv) mindestens ein freie Isocyanatgruppen aufweisendes Prepolymer mit einem Gehalt an aliphatisch gebundenen NCO-Gruppen von 7,0 bis 12 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
v) mindestens einen aminofunktionellen Polyasparaginsäureester der allgemeinen 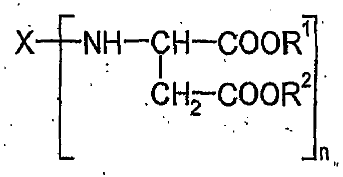 Formel
vi) Füllstoffe, Hilfs- und Zusatzstoffe; und

f) Schleifen der das Reaktivsystem (3) enthaltenden Bodenfuge (1).

## Beschreibung

Die vorliegende Erfindung betrifft Verfahren zur Herstellung einer verfüllten Bodenfuge in einem Bauwerk, insbesondere zur dauerelastischen Füllung von Bodenfugen, insbesondere Dehnfugen in Industrieböden.

Fußböden in industriell genutzten Fertigungs- und Lagerhallen sollen grundsätzlich absolut eben sein, damit dort Flurförderfahrzeuge problemlos zum Warentransport eingesetzt werden können. Derartige Böden bestehen üblicherweise aus Betonplatten, die zum Tragen geeigneter Lasten verwendbar sind, wobei die Oberfläche der Böden bei Bedarf mit einer Kunstharzbeschichtung ausgerüstet werden kann. Auf größeren Bodenflächen müssen dabei grundsätzlich Dehnfugen angebracht werden, um die thermische Ausdehnung der Bodenplatten auszugleichen. Derartige Dehnfugen werden typischerweise mit einem elastischen Kunststoff verfüllt, so dass eine planebene Oberfläche entsteht, die problemlos mit Flurförderfahrzeugen befahren werden kann. Die elastisch verfüllten Bodenfugen sind beim Befahren mit Flurförderfahrzeugen extremen Druckbelastungen ausgesetzt, so dass es hier immer wieder zu Schäden kommt.

Ein häufiges Schadensbild entsteht dadurch, dass die Fugenmassen mit den Betonplatten keine ausreichende Bindung eingehen, so dass sich mit der Zeit durch Ablösungen der Fugenmasse von den Bodenplatten Unebenheiten ergeben. Dies wird beispielhaft in der DE 10 002 866 A1 beschrieben.

Ein weiteres Schadensbild entsteht durch Materialalterung des zur Füllung eingesetzten Kunststoffs. Viele Kunststoffe neigen im Verlauf der Alterung zur Versprödung, zum Beispiel durch Weichmachermigration oder aber durch photochemische oder oxidative Alterung. Der versprödete Kunststoff neigt beim Befahren zur Rissbildung und zum Ausbrechen. Grundsätzlich ist jede Unebenheit der mit Flurförderfahrzeugen zu befahrenden Industriefußböden zu vermeiden, weil dies zur Schädigung der Flurförderfahrzeuge führt, die zu transportierenden Güter, wie beispielsweise empfindliche Lebensmittel, elektronische Geräte oder feinmechanische Geräte belastet und die Geschwindigkeit des Transports negativ beeinflusst.

Diese Ausführungen machen klar, dass geeignete Fugenvergussmassen neben einer hohen Elastizität zum Ausgleich der Fugenbewegung auch eine ausreichende mechanische Festigkeit, verbunden mit hoher Abrasionsbeständigkeit mitbringen müssen. Darüber hinaus müssen die Fugenvergussmassen schrumpffrei einzubauen sein und eine gute Haftung zum Untergrund aufweisen. Als Vergussmassen für den Verguss von Bodenfugen werden verschiedenste Materialien eingesetzt:
Kunststoff-vergütete bituminöse Fugenvergussmassen werden beispielhaft beschrieben in der DD 0 214 852 A1, der DD 0 152 801 A1 oder der DE-OS 19 716 544. Derartige bituminöse Fugenvergussmassen sind dauerhaft plastisch verformbar, was dazu führt, dass sich die Vergussmasse beim dauerhaften Überfahren aus den belasteten Bereichen herausdrückt, wodurch in relativ kurzer Zeit Unebenheiten entstehen. Darüber hinaus sind derartige Fugenmassen wenig abriebbeständig und zeigen eine unzureichende Haftung zum Beton.

Weichelastische Fugenvergussmassen, beispielsweise auf Basis von Polysulfiden wie sie in der DE10 105 477 beschrieben werden, sind nicht hinreichend abrasionsfest, so dass ein dauerhaftes Befahren derartig verschlossener Bodenfugen nicht möglich ist. Die gleiche Problematik betrifft auch Fugenvergussmassen auf Basis silylierter Polymere, wie Sie beispielhaft in der WO 2011 151 389 beschreiben werden.

Deshalb haben sich in Bereichen, die regelmäßig und dauerhaft mit Flurförderfahrzeugen befahren werden, 2-komponentige Fugenvergussmassen technisch etabliert, wobei die beiden reaktiven Komponenten vor der Applikation innig vermischt werden und in der Bodenfuge durch Polyaddition oder Polymerisation zur Aushärtung gebracht werden.

Fugenvergussmassen auf Basis von Epoxidharzen werden beispielhaft beschrieben in der DE 03 726 293 A1. Diese Vergussmassen haben generell den Nachteil einer nicht ausreichenden Elastizität und einer vergleichsweise langsamen Aushärtung, insbesondere bei tiefen Temperaturen. Elastifizierte Epoxidharze werden für diese Anwendung im Rahmen der DE 10 2008 012 302 vorgeschlagen. Diese elastifizierten Systeme härten aber noch langsamer aus und enthalten größere Mengen an nichtreaktiven Weichmachern, die langfristig aus der Vergussmasse auswandern, was zu einer Verhärtung und zum Haftungsverlust an den Fugenflanken führt.

Fugenvergussmassen auf Basis von klassischen 2-Komponenten-Polyurethanen, bestehend aus einer Polyisocyanatkomponente und einer Polyolkomponente haben prinzipiell den Nachteil der großen Feuchtigkeitsempfindlichkeit, wobei die Reaktion der Feuchtigkeit mit den Polyisocyanaten zur Blasenbildung führt, wobei diese Blasen grundsätzlich mechanische Schwachstellen in der vergossenen Bodenfuge darstellen. Beim dauerhaften Überfahren mit Flurförderfahrzeugen treten dadurch relativ schnell Schäden auf. Diese Problematik wird in der DE 04217023 hinreichend beschrieben. Deshalb werden im Rahmen dieser Anmeldung 2-Komponentensysteme auf Basis von Polyisocyanat-Prepolymeren und speziellen aromatischen Diaminen für den Fugenverguss beschrieben. Diese Systeme sind prinzipiell gut geeignet für den Verguss von dauerhaft befahrbaren Bodenfugen. Leider besitzen die verwendeten thiosubstituierten aromatischen Diamine ungünstige physiologische Eigenschaften und einen unangenehmen Eigengeruch, so dass Sie für Reparaturen in sensiblen Bereichen, z.B. in Lagerhallen für unverpackte Lebensmittel nicht einsetzbar sind. Polyurea-Systeme auf Basis aliphatischer Aminverbindungen, wie sie beispielhaft in der US 5 162 388 oder der US 5 442 034 beschrieben werden sind prinzipiell für den Fugenverguss wenig geeignet, da diese Systeme innerhalb von wenigen Sekunden aushärten, wodurch ein gleichmäßiger Verlauf in der Bodenfuge kaum gewährleistet ist.

Die Problematik eines durchdringenden und unangenehmen Eigengeruchs besitzen auch Fugenvergussmassen auf Basis von ungesättigten Acrylaten, wie Sie beispielhaft in der DE 03530464 beschrieben werden. Die in diesen Systemen unvermeidbar hohen Anteile an Acrylatmonomeren bedingen den sehr intensiven Eigengeruch, der einen Einsatz bei Reparaturen in sensiblen Bereichen problematisch macht. Darüber hinaus zeigen derartige Vergussmassen während der Aushärtung einen signifikanten Schrumpf, weswegen die Haftung zum Beton, insbesondere an den Flanken der Fugen prinzipiell schlecht ist.

Zusammenfassend lässt sich feststellen, dass es bisher kein technisch zufriedenstellendes 2-Komponentensystem für den Fugenverguss in stark belasteten und befahrenen Bereichen gibt. Weiterhin zeigen diese Ausführungen, dass es im Bereich solcher Bodenfugen einen erheblichen Reparatur- und Sanierungsbedarf gibt. Daraus ergibt sich die Forderung nach Systemen die sowohl im Neubau als auch im Reparaturbereich rationell zu verarbeiten sind.

Bei allen im Stand der Technik bekannten 2-Komponenten-Fugenvergussmassen ergibt sich der Nachteil, dass diese bei der Aushärtung einen großen Schrumpf zeigen und sich entweder gar nicht schleifen lassen oder erst nach langen Härtezeit.

Ausgehend vom beschriebenen Stand der Technik liegt daher der vorliegenden Erfindung die Aufgabe zugrunde, ein verbessertes Verfahren zur Herstellung einer verfüllten Bodenfuge bereitzustellen, welches die Nachteile im Stand der Technik überwindet und das einen schnellen Einbau gewährleistet.

Diese Aufgabe wird durch ein Verfahren zur Herstellung einer verfüllten Bodenfuge gemäß dem unabhängigen Anspruch gelöst. Bevorzugte Aspekte bilden den Gegenstand der jeweiligen Unteransprüche

Die Erfindung umfasst ein Verfahren zur Herstellung einer verfüllten Bodenfuge in einem Bauwerk, insbesondere einer (sanierten) Dehnfuge in Industrieböden, umfassend die Schritte:
a) Herstellen einer Ausnehmung im Bodenbelag in der Länge der Bodenfuge;
b) Verfüllen der Ausnehmung mit einem Reaktivsystem (als Fugenvergussmasse) enthaltend:
   i) mindestens ein freie Isocyanatgruppen aufweisendes Prepolymer mit einem Gehalt an aliphatisch gebundenen NCO-Gruppen von 7,0 bis 12 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
   ii) mindestens einen aminofunktionellen Polyasparaginsäureester der allgemeinen Formel 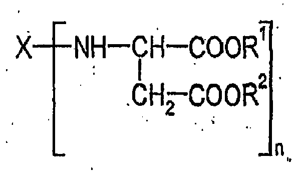
   iii) Füllstoffe, Hilfs- und Zusatzstoffe; und
c) Schleifen der das (gehärtete) Reaktivsystem enthaltenden Bodenfuge.

Das erfindungsgemäße Herstellungsverfahren für eine verfüllte Bodenfuge kann generell zur Herstellung von Bodenfugen wie Anschlussfugen, Arbeitsfugen oder Bauwerksfugen. Besonders vorteilhaft wird das erfindungsgemäße Herstellverfahren aber zur Herstellung von Dehnfugen in Industrieböden eingesetzt. Die Herstellung betrifft sowohl die Neuherstellung, als auch die Sanierung. Aufgrund des Einsatzes des Reaktivsystems im Herstellungsverfahren ergibt sich der Vorteil, dass sich die verfüllte Bodenfuge gleich verschleifen lässt, um die Bodenfuge fertigzustellen. Das Reaktivsystem zeigt bei der Aushärtung einen geringen Schrumpf und ein ideales Verhältnis von Härte und Elastizität, so dass es bereits kurz nach dem Einbau mit einem maschinellen Schleifer bearbeitet werden kann, um eine planebene Oberfläche herzustellen. Das Reaktivsystem ist bereits in anderen Zusammenhängen beispielsweise in der hiermit hier vollumfänglich einbezogenen EP 3 115 388 beschrieben, jedoch hat sich nun überraschenderweise gezeigt, dass die Aushärtung nur mit einem minimalen Volumenschrumpf verbunden ist und dass es sich in einem Herstellungsverfahren für eine Bodenfuge hervorragend schleifen lässt. Die Möglichkeit des Schleifens der das Reaktivsystems enthaltenden Bodenfuge erlaubt es, die geschlossene Bodenfläche in einem einzigen Arbeitsverfahren herzustellen.

Die Verfüllung der Bodenfugen gestaltet sich mit den erfindungsgemäß einsetzbaren Fugenvergussmassen denkbar einfach: die gegebenenfalls mit einer Grundierung vorbehandelten Bodenfugen werden in einem Arbeitsgang soweit verfüllt, dass ein Materialüberstand von ca. 1 mm entsteht. Überraschenderweise können die ausgehärteten Fugenvergussmassen bereits nach sehr kurzer Aushärtungszeit von 30 bis 90 Minuten mit Hilfe handelsüblicher Schleifmaschinen schnell und problemlos verschliffen werden. Im Gegensatz zu Vergussmassen auf Basis von Polyacrylaten oder auf Basis von klassischen Polyurethansystemen kommt es hierbei nicht zu einem Verbrennen der Oberfläche, so dass auf den zusätzlichen Arbeitsschritt einer farbgebenden, dekorativen Oberflächenversiegelung verzichtet werden kann. Unter dekorativen Gesichtspunkten kann die verschliffene Bodenfuge natürlich trotzdem mit einer transparenten oder auch pigmentierten Beschichtung überversiegelt werden, wobei Beschichtungssysteme auf Basis von aliphatischen Polyisocyanaten und/oder Polyisocyanatprepolymeren und Polyasparaginsäureestern ii) besonders bevorzugt sind.

Zur Herstellung der Fugenvergussmassen werden die Einzelkomponenten unmittelbar vor der Applikation intensiv miteinander vermischt. Die Reaktionsgemische reagieren bereits bei Raumtemperatur zu Polyharnstoffen aus und weisen deswegen nur eine begrenzte Topfzeit auf. Innerhalb dieser Topfzeit müssen die Reaktionsgemische verarbeitet werden. Die verwendbaren Fugenvergussmassen weisen bei 23° C eine Tropfzeit von 15 bis 40 Minuten auf, wobei Topfzeit definiert ist als der Zeitraum, in dem die Beschichtung homogen, ohne Fäden zu ziehen, applizierbar ist.

Die einzusetzenden Fugenvergussmassen sind gut fließfähig und besitzen selbstverlaufende Eigenschaften und können sowohl bei kälteren Außentemperaturen als auch bei höheren Sommertemperaturen sehr gut verarbeitet bzw. verwendet werden. Sie besitzen typischerweise bei einer Temperatur von 23°C eine Viskosität im Bereich von 2.000 mPas bis 20.000 mPas auf, vorzugsweise von 3.000 mPas bis 10.000 mPas, wobei die Viskosität rotationsviskosimetrisch bestimmt wird.

Bei Bedarf kann die Oberfläche der beim Schleifen bearbeiteten Bereiche in einem abschließenden Schritt noch transparent oder farbig versiegelt werden.

Schritt a) des erfindungsgemäßen Verfahrens beinhaltet das Herstellen einer Ausnehmung im Bodenbelag. Im Neubau ist diese Ausnehmung bereits konstruktionsmäßig vorgesehen. Bei der Reparatur oder Sanierung von Bodenfugen erfolgt das Herstellen einer Ausnehmung im Schritt a) des erfindungsgemäßen Verfahrens mehrstufig: zunächst werden parallel zur Bodenfuge vertikale Schnitte in einem Abstand von 2 cm bis 10 cm, vorzugsweise 3 cm bis 8 cm zur Bodenfugenkante angebracht. Die Schnitttiefe beträgt üblicherweise ca. 2 bis 4 cm.

Zusätzliche Verankerungsschnitte können natürlich in besonders belasteten Bereichen aus Sicherheitsgründen zusätzlich angebracht werden. Anschließend wird der Beton und das alte Fugenfüllmaterial entlang der Schnitte mit einem Stemmhammer entfernt. Nach Entfernung von Staub, altem Fugenmaterial und abgestemmten Betonpartikeln erhält man so ein neues Fugenprofil mit sauberen Kanten. Im Rahmen der vorliegenden Erfindung hat sich gezeigt, dass die im erfindungsgemäßen Verfahren einzusetzenden Fugenvergussmassen so eine gute Haftung zu den Bruchkanten besitzen, dass auf das Anbringen zusätzlicher Verankerungsschritte verzichtet werden kann.

Gemäß einem bevorzugten Aspekt weist die im Schritt a) des erfindungsgemäßen Verfahrens hergestellte Ausnehmung im Bodenbelag eine Breite von 6 - 16 cm auf.

Schritt b) des erfindungsgemäßen Verfahrens umfasst das Verfüllen der Ausnehmung. Wie bereits oben erwähnt besitzen die im erfindungsgemäßen Verfahren einzusetzenden Fugenvergussmassen eine ausgezeichnete Haftung zu den Bruchkanten der Ausnehmung. Daher kann das Verfüllen der Ausnehmung im Schritt b) des erfindungsgemäßen Verfahrens prinzipiell ohne Vorbehandlung des Untergrundes erfolgen. In besonders hoch belasteten Bereich kann es aber sinnvoll sein, die Ausnehmung mit einer Grundierung vorzubehandeln. Hierzu können grundsätzlich alle Betongrundierungen des Standes der Technik eingesetzt werden.. In einer besonders bevorzugten Ausführungsform werden hierfür schnellhärtende Polyurea-Grundierungen auf Basis von aliphatischen Polyisocyanaten und/oder Polyisocyanatprepolymeren und Polyasparaginsäureestern eingesetzt, wie sie beispielhaft in der eigenen Patentanmeldung EP 3098247 beschrieben werden. Bei Einsatz derartiger Grundierungen kann das Verfüllen mit den Fugenvergussmassen unmittelbar nach Applikation der Grundierung, d.h. ohne Arbeitsunterbrechung erfolgen.

Zum Verfüllen der Ausnehmung im Schritt b) des erfindungsgemäßen Verfahrens können die Fugenvergussmassen im Fall von weniger belasteten Bodenfugen insbesondere im Fall von Anschlussfugen, Arbeitsfugen oder Baufugen durch den Zusatz von Quarzsand gestreckt werden. Hierbei können Quarzsande verschiedener Körnung in Mengen von 10 bis 50 Gew%, bevorzugt 20 bis 40 Gew%, bezogen auf das Gesamtgewicht der Fugenvergussmasse zugesetzt werden. In Abhängigkeit von den baulichen Gegebenheiten kann auch nur der untere Teil der Ausnehmung mit der Quarzsand-gefüllten Variante der Fugenvergussmasse aufgefüllt werden und der obenliegende, belastete Teil mit der ungefüllten Fugenvergussmasse.

Zum Verfüllen der Ausnehmung im Schritt b) des erfindungsgemäßen Verfahrens können die Fugenvergussmassen in speziellen Fällen auch durch Zusatz von Gummimehl gestreckt werden, so wie dies im Rahmen der eigenen Patentanmeldung EP 3 115 388 beschrieben wird.

Im Schritt b) des erfindungsgemäßen Verfahrens wird die Bodenfuge mit der Fugenvergussmasse vollständig verfüllt. Bevorzugt wird die Menge an Fugenvergussmasse so bemessen, dass ein geringer Materialüberstand von ca. 1 mm resultiert.

Nach der Aushärtung der Fugenvergussmasse wird die Oberfläche im Schritt c) des erfindungsgemäßen Verfahrens planeben verschliffen, womit eine ebene Bodenoberfläche entsteht. Bevorzugt umfasst der Schritt c) das maschinelle Planschleifen der Bodenfugenoberfläche zur angrenzenden Bodenfläche. Ein bevorzugter Aspekt sieht vor, dass der Schritt Schleifen der das Reaktivsystem enthaltenden Bodenfuge das Diamantschleifen der Bodenfugenoberfläche sowie der angrenzenden Bodenfläche umfasst.

Bevorzugt wird der Schritt c) des erfindungsgemäßen Verfahrens in einem Zeitraum von weniger als 1,5 Stunden nach dem Schritt b) des Verfüllens durchgeführt, besonders bevorzugt in einem Zeitraum von 0,5 Stunden und 1,5 Stunden nach dem Schritt b) des Verfüllens.

Unter dekorativen Gesichtspunkten kann die Oberfläche der beim Schleifen bearbeiteten Bereiche in einem abschließenden Schritt noch transparent oder farbig versiegelt werden.

Im Folgenden wird die Erfindung anhand der in den beigefügten Zeichnungen dargestellten Beispiele näher erläutert.

Es zeigen:
- Fig. 1: eine Schnittansicht eines Ausführungsbeispiels einer erfindungsgemäß hergestellten Bodenfuge;
- Fig. 2: eine Schnittansicht eines weiteren Ausführungsbeispiels einer erfindungsgemäß hergestellten Bodenfuge mit einem anderen Ausnehmungsprofil; und
- Fig. 3: eine Schnittansicht eines weiteren Ausführungsbeispiels einer erfindungsgemäß hergestellten Bodenfuge mit Stahlprofilen.

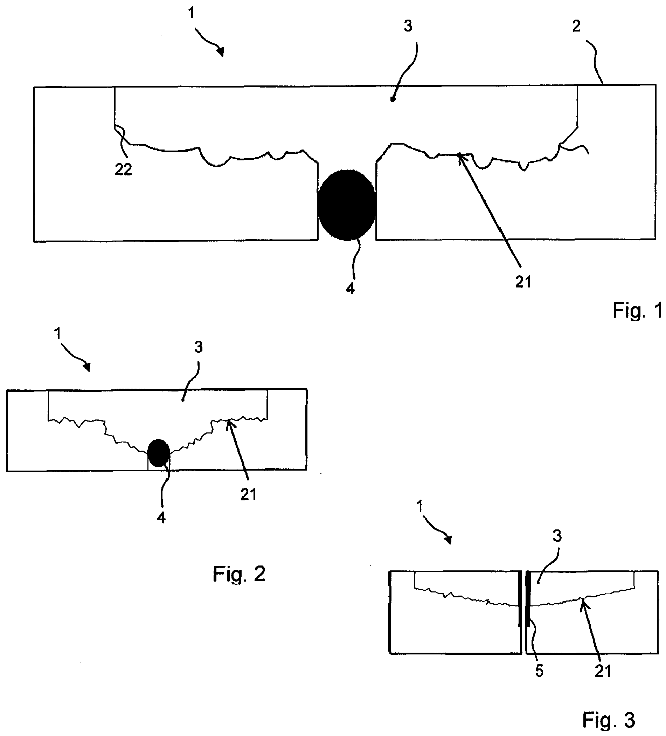

**Fig. 1** zeigt eine Schnittansicht eines Ausführungsbeispiels einer erfindungsgemäß hergestellten Bodenfuge. Die dargestellte Dehnfuge 1 in einem Industrieboden 2 mit einer glatten Oberfläche zeigt den Anwendungsfall einer Bodenfugensanierung. Dazu wurde im Bereich der ursprünglichen Bodenfuge eine Ausnehmung 21 im Bodenbelag 2 mit Einschneiden von Begrenzungsschnitten 22 hergestellt. Hierbei werden parallel vertikale Schnitte in einem Abstand von üblicherweise 2 cm bis 10 cm, vorzugsweise 3 cm bis 8 cm zur Bodenfugenkante (der Bauwerksfuge) angebracht. Die Schnitttiefe beträgt üblicherweise ca. 2 bis 4 cm. Anschließend wird der Beton und das alte Fugenfüllmaterial entlang der Schnitte mit einem Stemmhammer entfernt. Nach Entfernung von Staub, altem Fugenmaterial und abgestemmten Betonpartikeln erhält man so ein neues Fugenprofil mit sauberen seitlichen Kantenflächen 22. In diesem Beispiel erfolgt vor dem Verfüllen der Ausnehmung 21 mit einem Reaktivsystem 3, die Vorbehandlung mit einer Grundierung, insbesondere einer Polyurea-Grundierung auf Basis von aliphatischen Polyisocyanaten und/oder Polyisocyanatprepolymeren und Polyasparaginsäureestern. Die Grundierung ist aufgrund der Dickenverhältnisse nicht als eigene Schicht dargestellt. Im Bereich der Bauwerksfuge ist eine PE Schnur 4 zur Abdichtung angeordnet. Bodenfuge 1 wurde entsprechend mit einem Reaktivsystem verfüllt, so dass ein überstand von 1 mm im Zeitraum von 0.5 bis 1,5 Stunden nach dem Verfüllen abgeschliffen wurde.

**Fig. 2** zeigt eine Schnittansicht eines weiteren Ausführungsbeispiels einer erfindungsgemäß hergestellten Bodenfuge mit einem tiefer ausgestemmten Profil der Ausnehmung 21. Im Übrigen ist die mit dem Reaktivsystem 3 verfüllte Bodenfuge 1 analog aufgebaut, wie in Fig. 1 gezeigt.

**Fig. 3** zeigt ein weiteres Beispiel, bei dem anstelle der PE-Schnur Stahlbleche 5 mittig eingebaut sind.

Die nachfolgenden Beispiele sollen das Wesen der Erfindung näher erläutern, ohne diese jedoch einzuschränken.

### Beispiel 1

Herstellung eines Isocyanatgruppen aufweisenden Prepolymeren, Komponente i): 2200 g des handelsüblichen Allophanatgruppen und Isocyanuratgruppen aufweisenden Polyisocyanates auf Basis von Hexamethylendiisocyanat, mit einem NCO-Gehalt von 19 % und einer Viskosität von 290 mPas (23°C) aus Beispiel 2 (Basonat HA 3000, Handelsprodukt der Firma BASF SE, Ludwigshafen) werden mit 1800 g eines auf Propylenglykol gestarteten Polypropylenoxidpolyethers vom mittleren Molekulargewicht 2000 bei einer Temperatur von 80°C für 15 Stunden unter Rühren zur Reaktion gebracht. Dabei erhält man eine Polyisocyanatmischung mit einem NCO-Gehalt von 8,5 % und einer Viskosität von 2900 mPas (23°C).

### Beispiel 2

Herstellung einer aminfunktionellen Mischung, (Komponenten ii) und iii)): In einem handelsüblichen Labordissolver wird eine NH-funktionelle Mischung hergestellt auf Basis der nachfolgend genannten Komponenten:
Polyasparaginsäureester auf Basis von Diaminodicyclohexylmethan und Maleinsäurediethylester, Desmophen® NH 1420, Handelsprodukt der Bayer Materialscience, Leverkusen 660g
Difunktioneller Polypropylenglykol-Polyether vom Molekulargewicht 2000, Fa. Syskem Chemie GmbH, Wuppertal 110g
Martinal ON 313, Aluminiumhydroxid der Fa. Martinswerk GmbH, Bergheim 740g
Eisenoxid-Pigment Bayferrox schwarz 306 der Fa. Lanxess Deutschland GmbH, Köln 10g
Tris-2-Ethylhexylphosphat, Disflamoll TOF der Fa. Lanxess Deutschland GmbH, Köln 66g
Titandioxid-Weißpigment, Kronos1001 der Fa. Kronos International, Leverkusen 66g
Schwerspat, Bariflor 9210 der Fa. Minerals Girona SA, Spanien 110g
Kieselsäure HDK H18, Thixotropiermittel der Fa. Wacker Chemie AG, München 6g
Entschäumer BYK 066 der Fa. Byk Chemie,Wesel 2g
Tinuvin B75, Licht- und UV-Schutzmittel der Fa. BASF SE, Ludwigshafen 5g

### Beispiel 3

Herstellung einer gebrauchsfertigen Fugenvergussmasse 718g der Mischung aus Beispiel 2 werden mit 550 g des Polyisocyanates aus Beispiel 1 durch Rühren mit einem Spatel bei einer Temperatur von 21°C intensiv vermischt. Es entsteht eine gebrauchsfertige Fugenvergussmasse mit einer Topfzeit von 25 Minuten.

### Beispiel 4

Bestimmung der Polymereigenschaften der ausreagierten Fugenvergussmasse aus Beispiel 3:
Das ausgehärtete Polymer hat bei 23°C eine Endhärte von Shore A 60 und Shore D 40.

Das Abriebverhalten wurde mithilfe des Taber Abrasionstests nach DIN-EN 438-6 bestimmt:
Abrieb nach 500 Umdrehungen : 550 mg
Abrieb nach 1000 Umdrehungen: 1070 mg

Die mechanischen Eigenschaften wurden durch einen Zugversuch nach DIN-EN 527-1 bestimmt:
Zugspannung: 13,9 Mpa
Reißdehnung: 148 %

Der Schrumpf im Verlauf der Aushärtung wurde in Anlehnung an die DAfStb-Richtlinie "Schutz und Instandsetzung von Beton" (2001), Kapitel 4.4.9 mit Hilfe einer Schrumpfrinne geprüft und beträgt 0,1 mm/m

Zum Test der Schleifbarkeit wurde eine Gehwegplatte im Format 40 mal 40 cm mit dem 2-Komponentensystem aus Beispiel 3 in einer Schichtstärke von 2 mm beschichtet. Nach einer Aushärtungszeit von 90 Minuten bei 20°C wurde die Oberfläche mit einem Winkelschleifer mit Fächerscheibe P24 verschliffen. Das Material kann homogen abgetragen werden, es entsteht ein sauberes Schleifbild ohne Verfärbungen.

### Beispiel 5:

Nichterfindungsgemäßes Vergleichsbeispiel:
Eine Handelsübliche Vergussmasse auf Basis eines konventionellen 2Komponenten Polyurethans 'Remmers Verguss PUR 2K' wurde im Vergleich geprüft:
   Der Schrumpf im Verlauf der Aushärtung wurde in Anlehnung an die DAfStb-Richtlinie "Schutz und Instandsetzung von Beton" (2001), Kapitel 4.4.9 mit Hilfe einer Schrumpfrinne geprüft und beträgt 2,8 mm/m.

Zum Test der Schleifbarkeit wurde eine Gehwegplatte im Format 40 mal 40 cm mit 'Remmers Verguss PUR 2K' in einer Schichtstärke von 2 mm beschichtet. Nach einer Aushärtungszeit von 90 Minuten bei 20°C ist die Oberfläche noch klebrig ein Verschleifen ist nicht möglich. Nach einer Aushärtungszeit von 24 Stunden wurde die Oberfläche mit einem Winkelschleifer mit Fächerscheibe P24 verschliffen. Das Material kann nicht homogen abgetragen werden, es entsteht kein sauberes Schleifbild, die Fächerscheibe verklebt, an der Oberfläche des Materials bilden sich Verfärbungen.

### Beispiel 6:

Nichterfindungsgemäßes Vergleichsbeispiel:
Eine Handelsübliche Vergussmasse auf Basis eines ungesättigten Acrylats 'Triflex ProJoint' wurde im Vergleich geprüft:
   Der Schrumpf im Verlauf der Aushärtung wurde in Anlehnung an die DAfStb-Richtlinie "Schutz und Instandsetzung von Beton" (2001), Kapitel 4.4.9 mit Hilfe einer Schrumpfrinne geprüft und beträgt 3,2 mm/m.

Zum Test der Schleifbarkeit wurde eine Gehwegplatte im Format 40 mal 40 cm mit 'Triflex Projoint' in einer Schichtstärke von 2 mm beschichtet. Nach einer Aushärtungszeit von 90 Minuten bei 20°C ist das Material ausgehärtet, die Oberfläche ist aber noch leicht klebrig. Die Oberfläche wurde mit einem Winkelschleifer mit Fächerscheibe P24 verschliffen. Das Material kann nicht homogen abgetragen werden, das Schleifbild zeigt tiefe Rillen und Riefen. Gleichzeitig bilden sich an der Oberfläche des Materials Verfärbungen. Der Schleiftest wurde nach einer Aushärtungszeit von 24 Stunden wiederholt: die Oberfläche lässt sich nach dieser Zeit etwas besser verschleifen, jedoch zeigt das Schleifbild weiterhin tiefe Rillen und Riefen. Die Oberfläche zeigt nach dem Schleifen deutliche Verfärbungen.

## Patentansprüche

1. Verfahren zur Herstellung einer verfüllten Bodenfuge (1) in einem Bauwerk, insbesondere einer Dehnfuge in Industrieböden, umfassend die Schritte:
a) Herstellen einer Ausnehmung (21) im Bodenbelag (2) in der Länge der Bodenfuge (1);
b) Verfüllen der Ausnehmung (21) mit einem Reaktivsystem (3) enthaltend:
i) mindestens ein freie Isocyanatgruppen aufweisendes Prepolymer mit einem Gehalt an aliphatisch gebundenen NCO-Gruppen von 7,0 bis 12 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
ii) mindestens einen aminofunktionellen Polyasparaginsäureester der allgemeinen 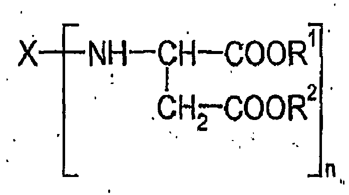 Formel
iii) Füllstoffe, Hilfs- und Zusatzstoffe; und
c) Schleifen der das Reaktivsystem (3) enthaltenden Bodenfuge (1).

2. Verfahren zur Herstellung einer Bodenfuge (1) nach Anspruch 1, wobei der Schritt Herstellen der Ausnehmung (21) im Bodenbelag (2) das Einschneiden von Begrenzungsschnitten (22) umfasst.

3. Verfahren zur Herstellung einer Bodenfuge (1) nach Anspruch 1 oder 2, wobei die hergestellte Ausnehmung (21) im Bodenbelag (2) eine Breite von 6-16 cm aufweist.

4. Verfahren zur Herstellung einer Bodenfuge (1) nach einem der vorangehenden Ansprüche, wobei der Schritt Verfüllen der Ausnehmung (2) mit einem Reaktivsystem (3) die Vorbehandlung mit einer Grundierung umfasst.

5. Verfahren zur Herstellung einer Bodenfuge nach Anspruch 5, wobei der Schritt Verfüllen der Ausnehmung (21) mit einem Reaktivsystem (3) die Vorbehandlung mit einer Polyurea-Grundierung auf Basis von aliphatischen Polyisocyanaten und/oder Polyisocyanatprepolymeren und Polyasparaginsäureestern umfasst.

6. Verfahren zur Herstellung einer Bodenfuge (1) nach einem der vorangehenden Ansprüche, wobei der Schritt Schleifen der das Reaktivsystem (3) enthaltenden Bodenfuge (1) das Planschleifen der Bodenfugenoberfläche zur angrenzenden Bodenfläche umfasst.

7. Verfahren zur Herstellung einer Bodenfuge (1) nach einem der vorangehenden Ansprüche, wobei der Schritt Schleifen der das Reaktivsystem (3) enthaltenden Bodenfuge (1) das Diamantschleifen der Bodenfugenoberfläche sowie der angrenzenden Bodenfläche umfasst.

8. Verfahren zur Herstellung einer Bodenfuge (1) nach einem der vorangehenden Ansprüche, wobei der Schritt Schleifen der das Reaktivsystem (3) enthaltenden Bodenfuge in einem Zeitraum von weniger als 1,5 Stunden nach dem Schritt des Verfüllens durchgeführt wird.

9. Verfahren zur Herstellung einer Bodenfuge (1) nach einem der vorangehenden Ansprüche, wobei der Schritt Schleifen der das Reaktivsystem (3) enthaltenden Bodenfuge (1) in einem Zeitraum von 0,5 Stunden und 1,5 Stunden nach dem Schritt des Verfüllens durchgeführt wird.
